# EUROPEAN PATENT SPECIFICATION

(11) **EP 4 309 102 B1**
(45) Date of publication and mention of the grant of the patent: **06.05.2026**
(21) Application number: 21931889.6
(22) Date of filing: 17.03.2021
(51) Int. Cl.: G06Q 10/0631

(54) **DATA DRIVEN APPROACHES FOR PERFORMANCE-BASED PROJECT MANAGEMENT**
DATENGESTEUERTE ANSÄTZE ZUR LEISTUNGSBASIERTEN PROJEKTVERWALTUNG
APPROCHES GUIDÉES PAR LES DONNÉES POUR UNE GESTION DE PROJET BASÉE SUR LES PERFORMANCES

(43) Date of publication of application: 24.01.2024
(73) Proprietor: Hitachi Vantara LLC, Santa Clara, CA 95054 (US)
(72) Inventor: ZHANG, Yongqiang, Santa Clara, California 95054 (US); LIN, Wei, Santa Clara, California 95054 (US); WANG, Mohan, Santa Clara, California 95054 (US); SCHMARZO, William, Santa Clara, California 95054 (US)
(74) Representative: MERH-IP Matias Erny Reichl Hoffmann Patentanwälte PartG mbB
(86) International application number: PCT/US2021/022777
(87) International publication number: WO 2022/197294

(56) References cited:
- KR-A- 20200 037 816
- US-A1- 2008 209 431
- US-A1- 2008 209 431
- US-A1- 2018 060 744
- US-A1- 2018 191 867
- US-A1- 2018 191 867
- US-A1- 2019 138 968
- US-A1- 2020 302 296
- FANAEI SEYEDEH-SARA: "Performance Measurement, Forecasting and Optimization Models for Construction Projects", THESIS IN THE DEPARTMENT OF BUILDING, CIVIL AND ENVIRONMENTAL ENGINEERING, 1 April 2019 (2019-04-01), pages iii-xviii, 1 - 261, XP055975778, Retrieved from the Internet <URL:https://spectrum.library.concordia.ca/id/eprint/985597/1/Fanaei_PhD_F2019.pdf> [retrieved on 20221028]
- FANAEI SEYEDEH-SARA: "Performance Measurement, Forecasting and Optimization Models for Construction Projects", THESIS IN THE DEPARTMENT OF BUILDING, CIVIL AND ENVIRONMENTAL ENGINEERING, 1 April 2019 (2019-04-01), pages iii-xviii, 1 - 261, XP055975778, Retrieved from the Internet <URL:https://spectrum.library.concordia.ca/id/eprint/985597/1/Fanaei_PhD_F2019.pdf> [retrieved on 20221028]

## Description

### BACKGROUND

### Field

The present disclosure is directed to project management systems, and more specifically, to the use of data driven approaches to facilitate performance-based project management.

### Related Art

A project (or program) is any undertaking, carried out individually or collaboratively through research or design, that is carefully planned (e.g., by a project team) to achieve a particular aim.

A project can have various attributes. For example, projects can be internal (e.g., product development) or external (e.g., customer solutions). Projects can also fall into different categories, such as software, service, and analytics. Projects can be in different industries, such as manufacturing, transportation, and healthcare among others. Projects vary in duration, extending from weeks to months to years. Projects can involve one-time tasks (e.g., consulting) or continuous work (e.g., consulting phases I, II, III; product development versions 1, 2, 3)

Given a project, the manager or stakeholder needs to understand and analyze these project attributes listed above and plan the management and execution of the project accordingly. The manager or stakeholder can analyze each individual attribute separately, combine several attributes together manually, and gain insights based on their experience and domain knowledge.

To optimize effectively, the project management includes several key components for consideration. A project can be managed as a sequence of events, which can often be a set of interrelated tasks that are executed over a fixed period of time and within certain cost range along with other limitations and risks. Before the project officially starts, the manager or stakeholder may need to estimate the performance, such as delivered profit margin. The manager or stakeholder may need to plan on the management and execution of the project to achieve the best outcome and performance. After the project starts, the manager may need to monitor the project progress and adjust the execution plan of the project as needed.

### SUMMARY

Several limitations and restrictions of conventional systems and methods are discussed below. The example implementations described herein introduce techniques to address the following issues.

At it, as a related art, Fanaei Seyedeh-Sara: "Performance Measurement, Forecasting and Optimization Models for Construction Porjects", a thesis in the Department of Building, Civil and Environmental Engineering, April 1st, 2019, XP055975778 is known, in which a performance evaluation mechanism for determined projects based on the combination of Fuzzy C-means algorithms (FCM), subtractive clustering and artificial neural networks (ANN) is stipulated.

In addition, in US 2018/191867 A1, various systems, methods and devices for a cyberphysical (IoT) software application development platform based upon a model driven architecture and derivative IoT SaaS applications are disclosed. Specifically, the system may include concentrators to receive and forward time-series data from sensors while also include message decoders to receive messages comprising the times-series data and storing the messages on message queues.

US 2019/138968 A1 relates to an enterprise AI and Internet-of-things platform.

US 2018/060744 A1 discloses creating a predictive model utilized during a prediction problem.

In a first issue with the related art, the project is manually reviewed and analyzed based on the project attributes. The understanding and analysis results are used to gain the insights of the project. Some important hidden factors in the project may not be discovered. Such review and analysis process can be time-consuming, subjective, and prone to risk. There is a need to automate the project analysis and profiling with a data-driven approach to discover the hidden factors for business insights in the project.

In a second issue with the related art, the project is manually monitored through regular check-ups or milestones. The performance of the project is manually analyzed and evaluated, and some adjustments may be made to the execution plan. Such monitoring and evaluation are time-consuming, subjective, and prone to risk. There is a need to have an automated and standard process or approach to monitor and evaluate the project progress with a data-driven approach.

In a third issue with the related art, the performance of the project is manually estimated based on the understanding and analytic results of some attributes of the project, some aspects of the human resources, and some constraints. However, not all attributes of the project, the human resources, and the constraints are systematically analyzed and summarized. Not all available information is utilized or used properly. Also, usually the estimate is on the final delivered performance, such as delivered profit margin, based on the available information before the project starts. Such manual estimation based on experience and domain knowledge is subjective, time-consuming, and prone to risk. Therefore, there is a need to have an automated, data-driven approach which can estimate and predict the project performance by incorporating all available information. The data-driven approach can also predict the project performance at each milestone by using all the available information (including the project execution information) before a milestone. There is also a need to provide explanations for the predictions.

In a fourth issue with the related art, the project manager designs a plan to execute the project by focusing almost exclusively on resource availability and scheduling to complete the project by an expected date rather than focusing on performance within the project. Not all attributes of the project, all aspects of the human resources, and the constraints are systematically analyzed and summarized. As a result, the project may not achieve the best performance. Such manual planning based on experience and domain knowledge is subjective, time-consuming, and prone to risk. Therefore, there is a need for data-driven approaches to systematically analyze and summarize all the relevant factors and optimize the project performance.

To address the four issues above, the example implementations described herein involve several aspects. One aspect involves project self-profiling, wherein several unsupervised learning schemes to automatically leam and derive hidden attributes for the project are introduced. Such techniques help automate the project analysis and profiling with data-driven approaches and discover the hidden factors for business insights and downstream tasks. Another aspect involves performance monitoring in which a data-driven approach to capture the transition of the project performance in terms of multiple key performance indicators (KPIs) among milestones is introduced. Example implementations also introduce an approach to predict the multiple performance KPIs at each milestone. Another aspect involves project performance prediction and root cause analysis in which a machine learning approach to predict the project performance at each milestone and explain the predictions is introduced. Another aspect involves project performance optimization in which a data-driven approach to optimize the project performance by identifying the best project team for the project is introduced.

Aspects of the present disclosure can involve a computer-implemented method for facilitating project management, which can include, for input of a project involving project data and employee data, executing feature extraction on the project data, and the employee data to generate features; executing a self-profiling algorithm configured with unsupervised machine learning on the generated features to derive clusters and anomalies of the project; executing a performance monitoring process on the generated features to determine a probability of a key performance indicator value at a milestone; and executing a supervised machine learning model on the generated features, the derived clusters, the derived anomalies, the probability of the key performance indicator value at the milestone to generate a predicted performance value of the project. The computer-implemented method can be executed as a computer program on one or more processors, and stored on anon-transitory readable medium.

Aspects of the present disclosure can involve a system for facilitating project management, which can include, for input of a project involving project data and employee data, means for executing feature extraction on the project data and the employee data to generate features; means for executing a self-profiling algorithm configured with unsupervised machine learning on the generated features to derive clusters and anomalies of the project; means for executing a performance monitoring process on the generated features to determine a probability of a key performance indicator value at a milestone; and means for executing a supervised machine learning model on the generated features, the derived clusters, the derived anomalies, the probability of the key performance indicator value at the milestone to generate a predicted performance value of the project.

Aspects of the another example helpful for understanding the present invention further involve a computer-implemented method, which can include generating a matrix from project performance data, the matrix structured in rows of employee related data across different dimensions and columns of project related data, the matrix involving values indicative of performance scores derived from the project performance data; for missing ones of the values in the matrix, generating the missing ones of the values in the matrix from a training process; for an input of a new project, identifying ones of the rows and ones of the columns that match the employee related data in the new project and the project related data of the new project; aggregating ones of the values corresponding to the identified ones of the rows and the ones of the columns; ranking employee groups from the employee related data according to the aggregated ones of the values; and selecting an employee group from the employee related data having a highest rank for execution of the new project. The computer-implemented method can be executed as a computer program on one or more processors, and stored on a non-transitory readable medium.

Aspects of another example helpful for understanding the present invention further involve a system, which can include means for generating a matrix from project performance data, the matrix structured in rows of employee related data across different dimensions and columns of project related data, the matrix involving values indicative of performance scores derived from the project performance data; for missing ones of the values in the matrix, means for generating the missing ones of the values in the matrix from a training process; for an input of a new project, means for identifying ones of the rows and ones of the columns that match the employee related data in the new project and the project related data of the new project; means for aggregating ones of the values corresponding to the identified ones of the rows and the ones of the columns; means for ranking employee groups from the employee related data according to the aggregated ones of the values; and means for selecting an employee group from the employee related data having a highest rank for execution of the new project.

Aspects of the present disclosure further involve a computer-implemented method for executing a self-profiling algorithm configured with unsupervised machine learning on generated features to derive clusters and anomalies of Internet of Things (loT) data, the method involving executing each unsupervised machine learning model algorithm from a set of unsupervised learning model algorithms on the generated features; determining a best one of the unsupervised machine learning models with an associated best parameter set for the each unsupervised machine learning model algorithm; and determining a best unsupervised model across the set of the unsupervised machine learning model algorithms from the best one of the unsupervised machine learning models of the each unsupervised machine learning model algorithm. The computer-implemented method can be executed as a computer program on one or more processors, and stored on a non-transitory readable medium.

Aspects of the present disclosure further involve a system for executing a self- profiling algorithm configured with unsupervised machine learning on generated features to derive clusters and anomalies of Internet of Things (IoT) data, the system involving means for executing each unsupervised machine learning model algorithm from a set of unsupervised learning model algorithms on the generated features; means for determining a best one of the unsupervised machine learning models with an associated best parameter set for the each unsupervised machine learning model algorithm; and means for determining a best unsupervised model across the set of the unsupervised machine learning model algorithms from the best one of the unsupervised machine learning models of the each unsupervised machine learning model algorithm.

Aspects of the present disclosure further involve a computer-implemented method for executing a self-profiling algorithm configured with the unsupervised machine learning on generated features to derive the clusters and the anomalies of Internet of Things (loT) insurance data, the method involving a) applying a set of unsupervised machine learning model algorithms to the generated features to generate an unsupervised machine learning model for each of the unsupervised machine learning algorithms; b) attaching unsupervised output from the unsupervised machine learning model to the features; and c) reiterating steps a) and b) until an exit criteria is met. The computer-implemented method can be executed as a computer program on one or more processors, and stored on a non-transitory readable medium.

### BRIEF DESCRIPTION OF DRAWINGS

FIG. 1 illustrates a solution architecture for performance-based project management, in accordance with an example implementation.
FIG. 2 illustrates a framework component to facilitate unsupervised machine learning with hyperparameter tuning, in accordance with an example implementation.
FIG. 3 illustrates an example of an iterative learning scheme, in accordance with an example implementation.
FIG. 4 illustrates an example recursive learning scheme, in accordance with an example implementation.
FIG. 5 illustrates a milestone-based KPI transition network, in accordance with an example implementation.
FIG. 6 illustrates a formulation of the multi-tasking KPI prediction problem in the table format, in accordance with an example implementation.
FIG. 7 illustrates an example of the project performance prediction for each milestone, in accordance with an example implementation.
FIG. 8 illustrates an example of the multi-level multidimensional collaborative filtering matrix for project team optimization, in accordance with an example helpful for understanding the present invention.
FIG. 9 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

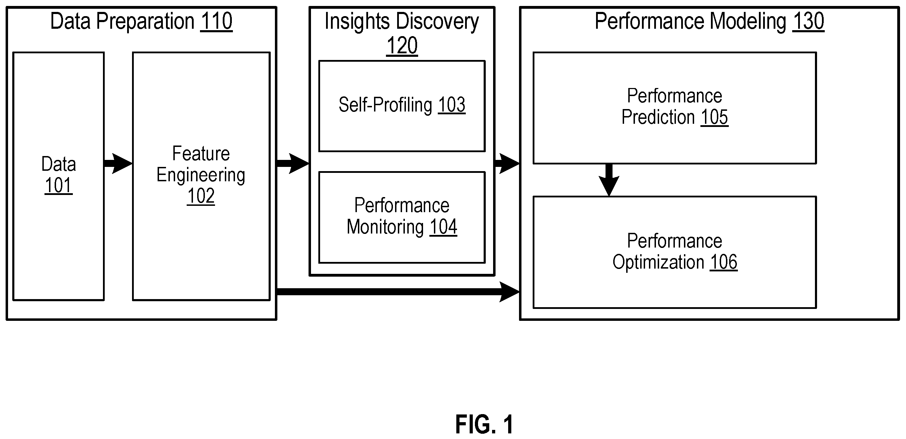

FIG. 1 illustrates a solution architecture for performance-based project management, in accordance with an example implementation. The solution architecture can involve various components as described below and throughout the present disclosure. The input 101 is provided through the components 102-106 to generate the predicted performance and optimal team for a project.

Data preparation 110 can involve the following components which collect and prepare the data for the later insights discovery 120 and performance modeling 130 components. Input 101 from multiple sources is collected and used as the input in this solution. In an example, the input 101 of a project can include, but is not limited to: project data such as project attributes and performance (final performance and milestone-based performance), and project opportunity management, as well as employee data such as employee attributes and performance (human resources and project based), and so on. The feature engineering component 102 is used to derive features which will be used to build models in insights discovery components and performance modeling components.

Insights discovery 120 can involve the following components to discover the insights from either the features or the project performance independently. Self-profiling component 103 discovers insights about the project through unsupervised learning techniques on the features of the projects and employees, (e.g., non-performance data). Performance monitoring component 104 discovers insights about the project through milestone-based performance transition network or a multi-tasking supervised machine learning model on the KPI-based performance data.

Performance Modeling 130 involves the following components to optimize the project performance in two scenarios. Given the project data and project team, performance prediction 105 predicts the milestone-based performance of the project. The output of this component is the predicted performance and the optimal team for a project. Given the project data and no proj ect team, performance optimization 106 finds the project team that can achieve the best project performance. The output of this component is the project team with the optimal project performance.

In the following description, each component in the solution architecture is discussed in detail.

The following description is directed to how to collect and prepare the data for the data-driven approaches.

### Data Preparation 110

Data 101 from multiple sources is collected. Depending on the availability of the data, the following data may be collected and used for building the solution here: project data, employee data, and client data.

Project data specifies the information on obtaining, defining, describing and monitoring a project. The project data includes but is not limited to a portion or all of the following components: the project description, various attributes of the project, the performance of the project, the project execution information, statement of work, and project opportunity management data. Project description is a description of the project. Project attributes involve the various attributes for each project. For example, a project can be internal (product development) or external (customer solutions), can fall into different categories (e.g., software, service, analytics, etc.), different durations (e.g., weeks, months, or years), a one time task (consulting) or continuous work (consulting - phase I, II, III; product development), a proof of concept (PoC) project or a formal consulting project, and so on in accordance with the desired implementation. Project performance involves using different metrics or KPIs to measure project performance. KPIs can involve a measurable value that demonstrates how effectively a project team is achieving key business objectives on a project. Usually the project can be split into several milestones, and such KPIs can be measured at each milestone. Overall, KPIs across the whole duration of the project can also be measured.

The KPIs can include, but are not limited to, the following. The revenue KPI measures all income and cash receipts of the project team derived from the ownership or operation of the project. The cost KPI measures the total funds needed to complete the project or work that can involve a direct cost and indirect cost. Direct cost and indirect cost, or even finer costs can be used as sub-KPIs as follows. Direct cost (DC) is an expense directly involved in a specific task or project, and can be identified to a specific cost center. The project direct cost includes the cost of employees, equipment and materials, and outsourcing contractor cost which are directly involved efforts or expenses, project management/engineering/procurement related costs such as transportation and custom clearance; construction management/labor/equipment and consumable materials/sub-contractor costs, and so on.

Indirect cost is any cost which is not directly involved in a specific task or project, and cannot be accurately attributed to a specific cost center. Indirect costs may be either fixed or variable. Indirect costs include administration, personnel and security costs. These are those costs which are not directly related to production.

Gross Profit Margin (GPM) is a KPI that measures the profitability of the project. GPM is the percentage of revenue that is actual profit before adjusting for operating costs, such as marketing, overhead, and salaries. An example calculation can be Gross Profit Margin = (Revenue - Cost)/Revenue, where Cost represents Cost of Goods Sold (COGS).

Resource Utilization Rate is a KPI that measures the difference of actual resource utilization vs expected resource utilization.

Task Complete Rate is a KPI that measures the percentage of completed tasks out of the total amount of work that is expected to be completed. The tasks can be measured in different work streams, including product management, development, quality control, and so on. Such tasks can be used as sub-KPls.

Client Satisfaction is a KPI that measures the level of satisfaction from customers.

Other KPIs may also be utilized in accordance with the desired implementation, and the present disclosure is not limited thereto.

Other project data can also involve a Statement of Work (SOW), which is the document that captures and defines all aspects of the project. The SOW is a detailed document as it will lay the groundwork for the project plan. The SOW can include an introduction of the project, the purpose of the project, scope of work, a list of tasks, milestones, deliverables, schedule, and so on.

Further, project opportunity management data includes information on obtaining the project, including the opportunity source, the timeline of opportunity stages, evaluation information (financial, technology, data, and risk), information about the sales team, payment terms, etc.

Additionally, the project data can involve project execution information. Once the project starts, some data that is related to the project performance can be collected. This includes, but is not limited to, data availability, data quality, development environment setup and availability, technology readiness, employee absence, communication availability and quality, KPIs that we just discussed at each milestone and so on.

Regarding employee data, a project team is formed with a group of employees. Each employee data specifies the information about each employee for workforce management. The employee data includes but not limited to a portion or all of the following information. Human Resource (HR) information includes all the data about the employee in the HR database, which includes employee demographic data, technical skills, interests, seniority, roles, position titles, and so on. Project specific data includes the performance of an employee based on the performance of completed projects or the performance at each milestone of completed or ongoing projects.

Client data can include, but is not limited to the following types of information. A client can be internal (product development) or external (consulting customers). A client can come from different industries (e.g., manufacturing, transportation, health care, and so on). A client can be of different sizes in terms of number of employees, revenue, or profit (e.g., big, medium, or small). A client can be in different regions or countries. A client can have different credits in terms of payment easiness. Other client data may also be incorporated in accordance with the desired implementation.

Once the data is collected, features can be derived from the data through the feature engineering component 102. The features can be manually derived based on the domain knowledge and data analysis. The example implementations described herein focus on automatic feature engineering techniques. The following techniques belong to unsupervised learning, where no label is used.

Principal component analysis (PCA) is the process of dimensionality reduction by projecting each data point onto only the first few principal components to obtain lower- dimensional data while preserving as much of the data variation as possible. PCA also has the effect of noise reduction which is caused by uncaptured variance. PCA makes the downstream models more generalized.

Zero-phase component analysis (ZCA) is another technique that is used for dimensionality reduction. ZCA performs different rotations from what PCA does. If the goal is compression of the original data (because principal components are sorted according to their explained variance), then PCA is the optimal analysis. ZCA is the optimal analysis if the goal is to keep the transformed random vector as similar as possible to the original one.

An autoencoder is another technique for dimensionality reduction and noise reduction. An autoencoder uses a type of artificial neural network to leam efficient data coding in an unsupervised manner. It uses the data as both an input layer and an output layer of the neural network, and one or more hidden layers with smaller sizes. An AutoEncoder can be split into two components: encoder where the data is first encoded into a coding of smaller size; decoder where the coding is then decoded into the original data. The effectiveness of the AutoEncoder is measured by how accurately the coding can represent the original data, which is in turn measured by the accuracy of the neural network. AutoEncoders have different types: regularized autoencoders (Sparse, Denoising and Contractive autoencoders), which are efficient and effective in learning representations for downstream tasks; and variational autoencoders, which are useful for generative models.

Through the PCA, ZCA, and autoencoder techniques described herein, there are two benefits and improvements with the example implementations comparing to the related art. First, the techniques reduce the feature space of the application for incorporation into machine learning techniques. When a performance prediction model is executed on a project, there are many model features that can be utilized. However, project data tends to be sparse and insufficiently dense enough for training into machine learning models. In an example of model features, there may be insufficient data (e.g., many columns but few rows of data), so example implementations described herein reduce the feature space to facilitate incorporation into machine learning techniques. Further, projects under project management may take a long time to facilitate (e.g., one or two years), which causes sparsity of data for use in training the machine learning techniques. By using feature space reduction as described herein, the data can then be utilized train models to predict the appropriate KPIs. As a result, both running time and model accuracy get improved. Second, the techniques can help reduce the noises in the raw data and features. As a result, only signals and small amount of noises in the raw data and features are retained and this will help improve the model accuracy and make the model be generalized to unseen testing data.

### Insights Discovery 120

Given the features derived from the data and the performance data, insights can also be discovered and used for decision-making and downstream tasks through insights discovery 120. Depending on what data is used to discover insights for the project, there are two solution components. The self-profiling component 103 discovers the insights about the project based on the project features. The performance monitoring component 104 discovers the insights about the project based on the project performance.

The self-profiling component 103 processes the features of the projects and discovers insights about the project. Self-profiling is done through unsupervised learning, with which the clustering algorithm can discover the project clusters based on similarity of projects and assign each project to a cluster; while the anomaly detection algorithm can identify project anomalies based on the significant difference of a project from the rest of projects and determine whether a project is an anomalous project or not.

In the example implementations described herein, a framework to solve unsupervised learning tasks through supervised learning techniques is utilized. For each unsupervised learning task, multiple unsupervised models in terms of model algorithms and parameter sets are built and evaluated. Based on the model evaluation result, the best model is chosen as the final unsupervised model for the unsupervised learning task. Here there are two learning schemes for unsupervised models by reusing one component in the framework as described in "AUTOMATED REAL-TIME DETECTION, PREVENTION, AND PREVENTION OF RARE FAILURES IN INDUSTRIAL SYSTEM WITH UNLABELED SENSOR DATA", filed October 30, 2020 as PCT Application No.: PCT/US2020/58311.

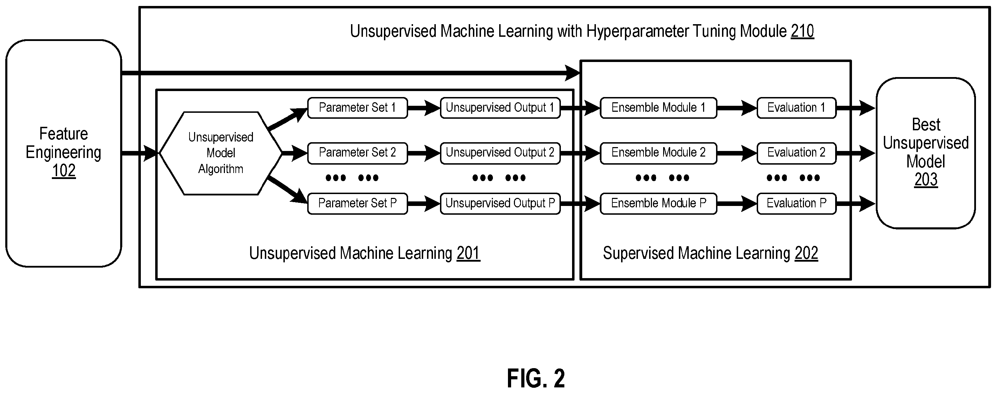

FIG. 2 illustrates a framework component 210 to facilitate unsupervised machine learning with hyperparameter tuning, in accordance with an example implementation. For each unsupervised machine learning model algorithm in the unsupervised machine learning module 201, this component is used to find the parameter set that leads to the model that meets the desired selection criteria (e.g., best accuracy model, lowest error model, etc.), which will be termed as the "best" model and the "best" parameter set herein. Each parameter set is used to build an unsupervised model. The model is evaluated with the subsequent ensemble supervised learning module 202, and then the best model with the given parameter set is chosen as the best unsupervised model 203. In the unsupervised machine learning with hyperparameter tuning module 210 in FIG. 2, the input is the features that are derived from the feature engineering module 102 and the output is the best unsupervised model 203.

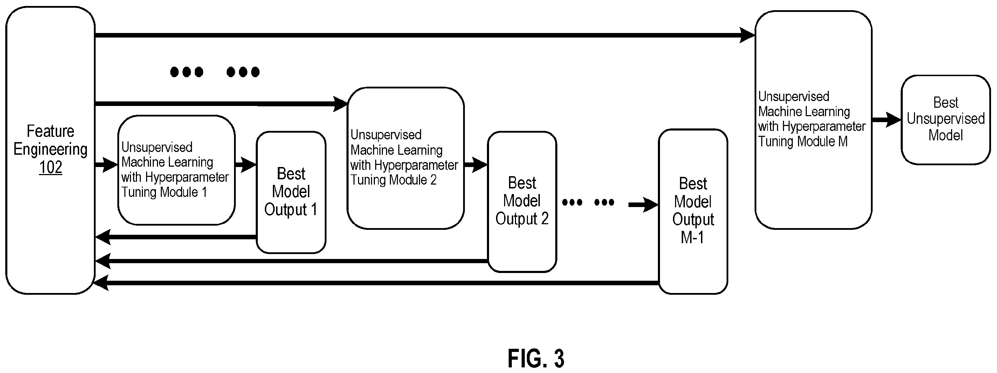

FIG. 3 illustrates an example of an iterative learning scheme, in accordance with an example implementation. With the Unsupervised Machine Learning with Hyperparameter Tuning Module 210 in FIG. 2, an iterative learning scheme as shown in FIG. 3 is introduced. The flow of the iterative learning scheme is as follows.

At first, an unsupervised model algorithm is selected and applied to the features that are derived from the Feature Engineering module 102. After the best unsupervised model for the given model algorithm is identified, the model is applied to the features to generate the unsupervised output. The unsupervised output is then attached to the features. This flow is reiterated until the exit criteria is met. Depending on the desired implementation, the exit criteria can involve, but is not limited to, the model evaluation metrics meet a predefined threshold, or the predefined list of unsupervised model algorithms are used.

Thus, the learning scheme as illustrated in FIG. 3 iteratively applies an unsupervised learning model to the features, and attaches the unsupervised model output from the current round to the features to build unsupervised models in the next round. There are several variations for the iterative learning scheme as described below.

In one example variation, there can be different machine learning types for intermediate unsupervised learning model algorithms. In this scheme, "Unsupervised Machine Learning with Hyperparameter Tuning Module M" from FIG. 3 has the same machine learning type as the "Best Unsupervised Model". In other words, they are both "clustering" algorithms, or they are both "anomaly detection" algorithms.

"Unsupervised Machine Learning with Hyperparameter Tuning Module A", where 1 <=X<M can have the same or different machine learning type as the "Best Unsupervised Model". For instance, if the "Best Unsupervised Model" is a clustering type, then "Unsupervised Machine Learning with Hyperparameter Tuning Module A', where 1<=X<M, can be either "clustering" or "anomaly detection", regardless of the machine learning type of the "Best Unsupervised Model". The reason is that the unsupervised model output of different machine learning types can help discover insights in the features and build the best model of the desired machine learning type.

In another example variation, there can be an optimization of the sequence of unsupervised model algorithms. In such an iterative learning scheme, the sequence of the unsupervised model algorithms can make a difference on the final best unsupervised model. The number and order of unsupervised learning model algorithms are optimized through a forward model selection algorithm.

To initialize the scheme, a set of unsupervised learning model algorithms are selected based on the machine learning knowledge. Each unsupervised learning model algorithm is then applied to the features derived from the feature engineering module 102. Then the best unsupervised model with the best parameter set is obtained for each unsupervised learning model algorithm. The evaluation result is recorded as the global best evaluation result. The best unsupervised model in the first module ("Unsupervised Machine Learning with Hyperparameter Tuning Module 1") is used, and then the output from the best model is attached to the features.

After the above initialization, the scheme conducts forward selection in which it randomly selects another unsupervised learning model algorithm and applies it to the current features. Then, for the current unsupervised learning model algorithm, the best unsupervised model with the current best evaluation result is obtained. If the current best evaluation result is better than the global best evaluation result, then the current model in the sequence is kept and the scheme attaches the output of the best unsupervised model to the features; otherwise, the current model is dropped. The forward selection is repeated until the existing criteria is met.

In another example variation, there is multiple tasking. Given the data, there can be a need to identify both project clusters and project anomalies. The iterative learning scheme can be modified to complete these two tasks within one run. For this task, the last two modules are modified to be the two unsupervised machine learning types: one is clustering and the other is anomaly detection. The best models from the last two modules will be used for the models of the two tasks.

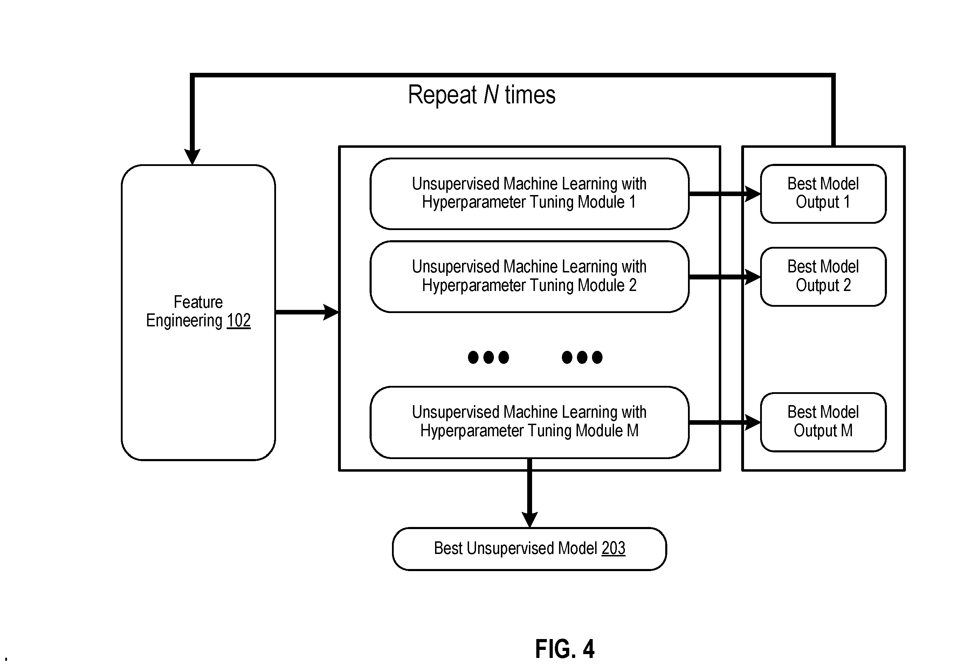

FIG. 4 illustrates an example of a recursive learning scheme, in accordance with an example implementation. With the "Unsupervised Machine Learning with Hyperparameter Tuning Module" 210 in FIG. 2, a recursive learning scheme is introduced as shown in FIG. 4. The workflow is as follows.

At first, a set of unsupervised model algorithms are selected based on the machine learning knowledge. Each unsupervised model algorithm in the set is applied to the features that are derived from the feature engineering module 102. The best model is selected with the best parameter set, and then the scheme generates the unsupervised output from the best model for each model algorithm. The unsupervised output from each unsupervised model algorithm is attached to the features. This recursive flow is repeated until the exit criteria is met. Depending on the desired implementation, the exit criteria can include, but is not limited to, the following: the model evaluation metrics meet a predefined threshold, the predefined number of rounds ( N ) are done, and/or the evaluation results converge, i.e., the evaluation result from the current round is close to the evaluation result from the last round based on a predefined closeness threshold.

This learning scheme recursively applies a set of unsupervised learning model algorithms to the features, and attaches the unsupervised model output from the current round to the features to build unsupervised models in the next round.

There are several variations for the recursive learning scheme.

In one example variation for the recursive learning scheme, there can be different machine learning types for intermediate unsupervised learning model algorithms. In the last round N, "Unsupervised Machine Learning with Hyperparameter Tuning Module JC where 1<=X<= , has the same machine learning type as the "Best Unsupervised Model". For each round Y, where 1 <=Y<N, "Unsupervised Machine Learning with Hyperparameter Tuning Module", where 1<=X<=M, has the same or different machine learning type as the "Best Unsupervised Model".

In another example variation for the recursive learning scheme, there can be multiple tasking. Given the data, there can be a need to identify both project clusters and project anomalies. The recursive learning scheme can be modified to complete these two tasks within one run. For this goal, in the last round N, "Unsupervised Machine Learning with Hyperparameter Tuning Module X", where 1<=X<= , has a mix of two machine types: clustering and anomaly detection. The best model for each machine learning type in the last round will be used for the best models of the two tasks.

In another example variation for the recursive learning scheme, there can be a model algorithm dropout. At each round, some model algorithms can be dropped out and only the remaining model algorithms are used in this round. A dropout ratio is used to control how many model algorithms are dropped out. For instance, "dropout ratio = 0.1" means that in each round, 10% of the model algorithms are randomly selected and dropped out and the remaining 90% of the model algorithms are used in each round. The model algorithms that are used in each round can be different since the model algorithms are randomly selected and dropped out in each round. The dropout ratio can also be tuned with hyperparameter tuning techniques. One approach is to list multiple dropout ratios and try each one and then see which dropout ratio can lead to the best model.

Using dropout will solve the potential overfitting problems and make the final model more generalized. Additionally, using a subset of model algorithms can help reduce the runtime.

In another example variation for the recursive learning scheme, there can be a data sampling, where a subset of the data to train the model can be used through the data sampling techniques at each round. A sampling rate to control how much data is used in each round. For instance, "sampling rate = 0.6" means 60% of the data is used in each round and the remaining 40% of the data is not used in each round. The data that is used in each round can be different because the data is randomly sampled in each round. The sampling rate can also be tuned with hyperparameter tuning techniques. One approach is to list multiple sampling rates and try each one and then see which sampling rate can lead to the best model.

Using data sampling will solve the potential overfitting problems and make the final model more generalized. Additionally, using a subset of data for model training can help reduce the runtime.

For performance monitoring 104, projects can be split into several milestones. The manager or stakeholder reviews the project progress at each milestone and may take actions based on the project performance at each milestone. The project performance can be measured with various KPIs as described herein. Therefore, monitoring the KPIs at each milestone can lead to some key insights, which may help managers or stakeholders to make strategic business decisions.

Through the example implementations illustrated in FIG. 3 and FIG. 4, the model performance can be improved in terms of bias and variance.

With regards to bias removal, for the same dataset, different model algorithms with different parameter sets can generate quite different outputs. Thus, the bias of the model is introduced. How to remove the model bias, and how to tell which output is the best and how to decide the final model to choose have been problems in the related art. The proposed approach in the example implementations use several model algorithms and introduce some learning logics to ensemble them to derive a final model.

With respect to variance removal, if the dataset is very noisy and has a lot of variance, then it can be difficult to use model algorithms to find the real signals, which can lead to lower model performance. Example implementations described herein utilize the model outputs from the current round as additional features to build models in the next round. The intermediate outputs are extracted from the intermediate models and can be considered to be closer to the signals in the original data. Using them as additional features can emphasize more of the signals when building the model for the next round. The features will converge gradually round by round into the signals, and the final model can thereby perform well on such features.

Another benefit from the example implementations described herein involves automation: model selection and ensemble are all done in an automated pipeline. In the related art, this is done through manual evaluation and verification, which is time consuming and error prone, which is in contrast to the automated implementations described herein.

Further, the data utilized to build a model is problem specific. Given a problem, domain knowledge can be utilized to determine what data could be useful. If the data is provided, data analysis such as correlation analysis can be conducted to determine the relationship of the feature data and the target. Feature transformation techniques and feature selection techniques may also be utilized to derive and select useful features to build the model.

As an example, the example implementations of FIG. 3 and FIG. 4 can be extended to Internet of Things (IoT) data, such as loT insurance or other loT systems. In an example involving loT insurance, projects can involve the insurance against machine downtime or guarantee machine uptime for a certain period. The loT data comes from sensors that are installed on the assets. Multiple sensors are collectively used to derive some insights about the asset; for instance, whether there is an anomaly or failure in the asset. The example implementations of FIG. 3 and FIG. 4 can be used to derive insights about the assets including the clusters of values of multiple sensors and the anomalies of the asset.

Although the examples of FIG. 3 and FIG. 4 are described with respect to unsupervised learning tasks, such implementations may also be further extended to supervised learning tasks in accordance with the desired implementation.

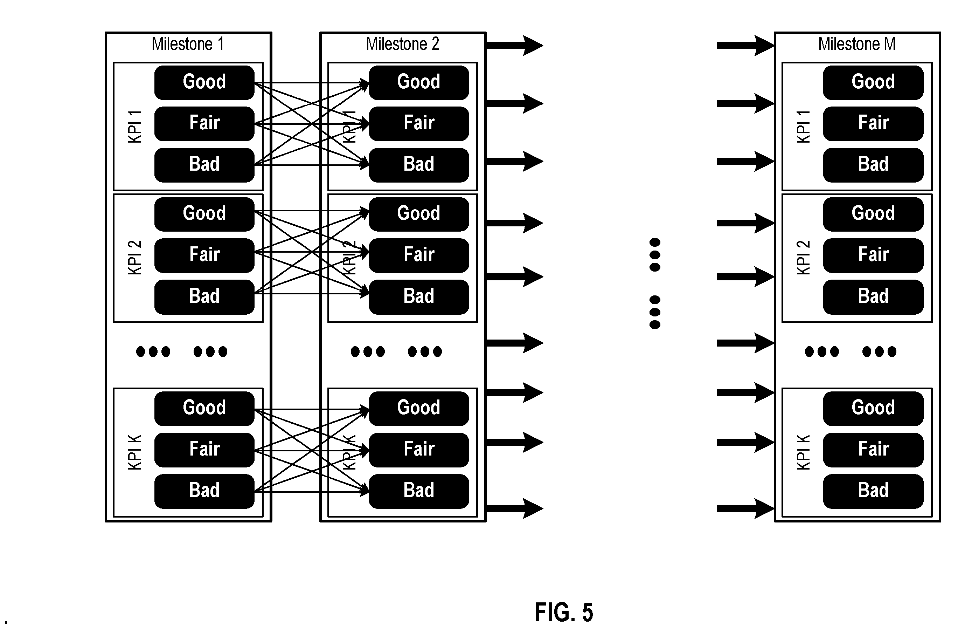

FIG. 5 illustrates a KPI transition network, in accordance with an example implementation. In this network, each project KPI is categorized into "Good", "Fair" or "Bad". For each KPI, the transition likelihoods from one milestone into the next milestone are captured and aggregated based on historical projects. One approach is to count the number of times a category in one milestone transitioned to a category in the next milestone, and use the ratio as the transition likelihood from a category in one milestone to a category in the next milestone. This approach is done within each KPI.

For instance, for KPII, assume there are ten historical projects in the "Good" category in round 1. Out of these ten projects, seven projects are in the "Good" category in the second round; two projects are in the "Fair" category in the second round; and one project is in the "Bad" category in the second round. The results are therefore:
- 7/10 = 0.7 as the transition likelihood from "Good" (Milestone 1) to "Good" (Milestone 2)
- 2/10 = 0.2 as the transition likelihood from "Good" (Milestone 1) to "Fair" (Milestone 2)
- 1/10 = 0.1 as the transition likelihood from "Good" (Milestone 1) to "Bad" (Milestone 2)

Given a new project and its category in a milestone, the transition graph can be applied to check the transition likelihood to different categories in the next milestone. The transition likelihood is used as an estimate of the category for the KPI and to determine business decisions accordingly. Such likelihood is regarded as a prior probability from the Bayesian network point of view. There are several variations to the described transition network.

In the first variation, depending on the desired implementation, numerical KPI measures can be used. For instance, there can be five bins for each KPI: 0-20%, 20%~40%, 40%~60%, 60%~80%, 80%~100%. Each KPI value can be assigned into one of the bins and build the transition network accordingly.

In the second variation, the transition from one KPI in one milestone to another KPI in the next milestone can be facilitated. Such transitions are cross-KPI transitions. This transition is useful when some KPIs are correlated and the category of one KPI in one milestone is related to the category of a correlated KPI in the next milestone.

In the third variation, there can also be cross-milestone transition. The transition from one milestone to other milestones can be facilitated. For instance, transitions can happen from milestone 1 to milestone 3. This is useful when the category of KPI at an earlier milestone is correlated to the category of the KPI in a later milestone. This is useful for the project stakeholder or manager to have an estimate of performance several milestones ahead.

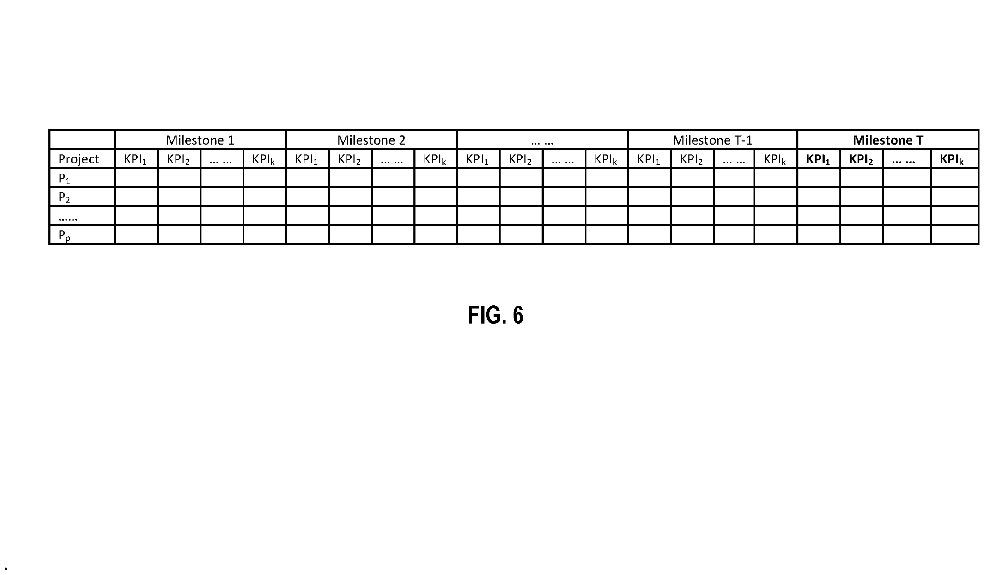

FIG. 6 illustrates a solution to derive or predict the KPIs in a later milestone based on the KPIs in earlier milestones in the table format, in accordance with an example implementation. Example implementations can predict categories of multiple KPIs in each milestone. At any given milestone T, a multi-tasking machine learning classification model can be built for all the KPIs in this milestone. The features are the category of each KPI at each milestone (milestone 1 to milestone /' -/) for each project in the historical data. The target is the category of the KPIs in milestone T, i.e., three classes: "Good", "Fair" and "Bad". Note that only the performance KPI data is used as features and target to build the machine learning model. As shown in FIG. 6, all the KPIs can be used at milestones 1 to T-\ as features, and the KPIs at milestone T as target. Given a new project at milestone 7-1. the model can be applied to predict the categories of all the KPIs at milestone T.

This is a multi-tasking model in that multiple targets (i.e., multiple KPIs at milestone 7) need to be predicted within one model. Multiple learning tasks are solved at the same time, while exploiting commonalities and differences across tasks. This method can result in improved learning efficiency and prediction accuracy for the task-specific models by learning them jointly when compared to training the models separately.

Multi-task learning works better than single task learning because regularization induced by requiring an algorithm to perform well on a related task can be superior to regularization that prevents overfitting by penalizing all complexity uniformly. For the problem here, the KPIs at milestone T may be correlated and the tasks to predict the KPIs share significant commonalities and are generally slightly under-sampled. On the other hand, for KPIs that are not related to each other, multi-task learnings are beneficial for learning unrelated tasks as well.

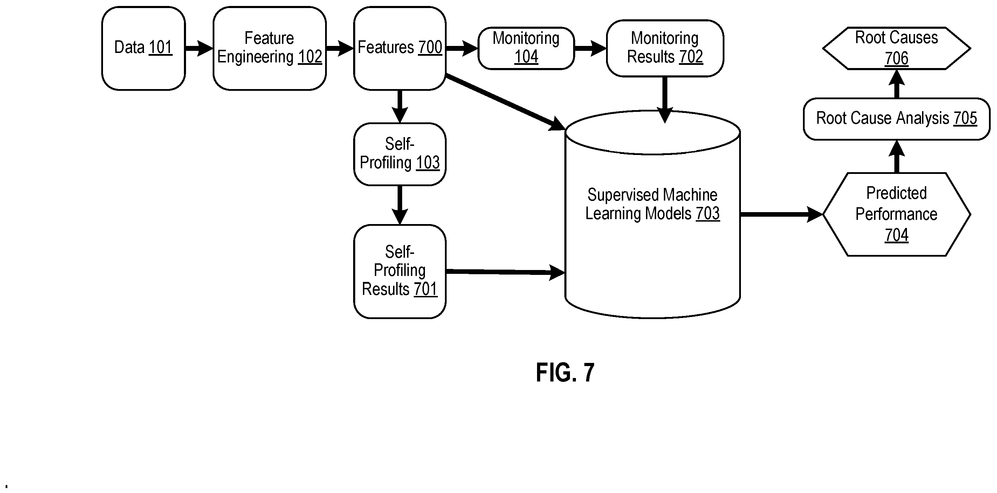

FIG. 7 illustrates an example implementation of Performance Prediction 105 in FIG. 1, which can predict project performance and identify the root cause for each prediction at each milestone. A machine learning approach is introduced to predict the project performance for each milestone and to explain the predictions.

For each project milestone, example implementations will predict the performance of the project in that milestone based on all the data available before that milestone. At first, the data 101 as described herein (e.g., project data, employee data, client data) is collected. Feature engineering 102 is used to generate features 700 from the data. Feature engineering techniques include identifying useful attributes in the data and use them as features directly based on domain knowledge, manual feature transformation and derivation based on domain knowledge and data analysis, and automatic feature derivation with techniques as described herein. The generated features can involve original features and derived features. Some data can directly be used as features without data transformation, which are original features. Other features are derived from the data with data transformation or feature derivation processes which are derived features. One way to derive features based on domain knowledge and data analysis is to aggregate performance data for each individual based on the performance of the projects engaged by the individual. Similarly, the aggregation can be done for each team, organization, and client. Further, the automatic feature derivation techniques include PCA, ZCA and AutoEncoder which help reduce feature space, reduce noises and keep key signals in the data.

For project self-profiling 103, the self-profiling techniques as described herein are applied to features from the feature engineering module 102 in order to derive hidden attributes, including project clusters and project anomalies to provide as self-profiling results 701. Such hidden attributes can be used to predict the project performance in the next milestone.

For performance monitoring 104, the performance monitoring techniques as described herein are applied to performance KPI data to derive the transition likelihood (based on transition network of FIG. 5) and/or probability (based on the performance prediction model of FIG. 6) of the category of each KPI in the next milestone to be provided as monitoring results 702. Such likelihood can be used to build the model to predict performance in the next milestone.

To build a supervised machine learning model, the features and target need to be prepared. Thus, in FIG. 7, the generated features from Features 700, the derived clusters and derived anomalies from Self-Profiling Result 701, and the probability of the key performance indicator value from Monitoring Results 702 are combined together (as the "feature" in the supervised machine learning model) to Supervised Machine Learning Models 703, in order to build supervised machine learning models to predict the project performance at each milestone (as the "target" in the supervised machine learning model). If the performance is measured in categorical values, like "Good", "Fair", or "Bad", the classification models can be applied; if the performance is measured in numerical values, the regression models 703 can be applied. Several model algorithms can be used, including but not limited to linear regression, random forest, gradient boosting, neural network, and so on. Then, the hyperparameters of the selected model algorithms can be tuned to select the best model. Additionally, feature selection can also be applied to select the features that are predictive of the project performance.

Once the supervised machine learning model is built, the model can be used to predict the project performance. Predicted Performance 704 indicates the project performance that is predicted from Supervised Machine Learning Models 703.

Given Predicted Performance 704, root cause analysis may be performed to determine the leading factors for the predicted project performance. Root cause analysis 705 is used to identify the underlying root cause for each predicted project performance. Based on the domain knowledge associated with the root cause, the stakeholder or manager can make business decisions. The root cause 706 can also be linked to the prescriptive actions (e.g., based on domain knowledge) and automate the process to obtain the prescriptive actions given a root cause 706.

Identification of the root cause 706 of predictions corresponds to interpreting the predictions in the machine learning domain, and some techniques and tools exist for such tasks. For instance, "ELI5" is an explainable artificial intelligence (AI) package that can help identify the key features that lead to the predictions. The key features may have positive impacts for the predictions or negative impacts for the predictions. ELI5 can output top P positive key features and top Q negative key features.

For milestone-based performance optimization, the project stakeholder or manager needs to identify the best project team to optimize the project performance by incorporating the constraints on a project, team, client, and so on for each given project. Example implementations utilize a multi-level, multi-dimensional collaborative filtering approach to solve the project performance optimization problem.

Collaborative filtering is the process of filtering for information or patterns using techniques involving collaboration among multiple agents, viewpoints, data sources, etc. The popular application of collaborative filtering is recommender systems, where an item can be recommended to a user based on similar user interest in this item. Traditionally, a matrix with "user" as row and "item" as column is built based on the historical data, and collaborative techniques like similarity - based techniques and matrix factorization can be applied to fill in the missing values in the matrix. Here a multi-level collaborative filtering technique is introduced to solve the project performance optimization problem.

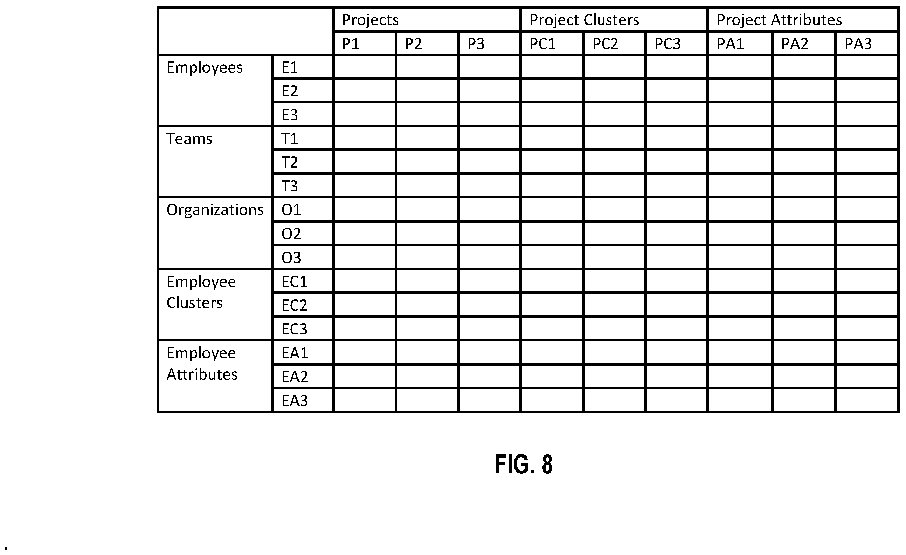

FIG. 8 illustrates an examples helpful for understanding the present invention of Performance Optimization 106 in FIG. 1 through the multi-level multidimensional collaborative filtering matrix. Given the project performance data in the past, a matrix can be formed as shown in FIG. 8, as follows.

The row is the employee related data in different dimensions at different levels, or different employee groups. The employee related data can involve individual employee ID or name, team in organization chart, organization in organization chart, employee clusters based on project self-profiling, employee attributes, and so on in accordance with an example implementation.

The column is the project related data in different dimensions at different levels, or different project groups. The column includes individual projects, project clusters based on project self-profiling, project attributes, and so on in accordance with the desired implementation.

Value is the performance score, as described herein. For example, the profit margin from the performance KPIs can be a good candidate to measure the overall performance of the project.

The matrix has missing values and the training process is used to fill in the missing values by using collaborative filtering techniques, which includes an item-item similarity based algorithm and a matrix factorization algorithm.

In an item-item similarity based algorithm, the algorithm first builds the model by calculating the similarity scores between all pairs of item vectors. The similarity function can be of various forms, such as correlation between item vectors or cosine of item vectors. Then the algorithm uses the most similar items to a user's already-rated items to generate a list of recommendations to the user. The intuition of this recommendation is that "The users who rate item X highly, like you, also tend to rate item Y highly, and you haven't rated item Y yet, so you should try it".

In matrix factorization algorithm, the matrix (with some existing values and a lot of missing values) are factorized into two vectors: user latent factor (column vector, also can think of this as coefficients in the latent model) and item latent factor (row factor, also can think of this as item features in the latent model). The two vectors can be multiplied and then be used to make predictions and fill in the missing values in the matrix. The factorization process can be done through a gradient descent optimization where we take one vector fixed and improve the other one each time.

Once the matrix is built, it can be used to generate the optimal team for a new project. Given a new project, there is a need to find the employees, teams, organizations, employee clusters and employee attributes that are the best fit for the project in order to achieve the best performance. Examples helpful for understanding the present invention can utilize a collective model inference process to identify the project team at the employee group level, where the employee group level can be: individual employees, teams, organizations, employee clusters and employees of the same attributes.

At first, given a new project, the process finds all the matching columns based on the project information. For the employee group level in question, the process identifies all the employee groups at the employee group level. For each employee group, the process finds all matching rows. For each employee group, the process gets all the performance scores for all the matching rows and columns.

Then, the process aggregates the performance scores. The aggregation method can be a simple average of the performance scores, or a weighted average of the performance scores, which can involve the average of the performance scores divided by the number of employees that are covered in the rows of the matching employee groups. Then, the process ranks all the aggregated performance scores for employee groups in the employee group level and selects the employee group with the highest performance score for the project.

In the related art, the traditional collaborative filtering technique tend to fail because there is a very limited number of engagements between each individual employee and each individual project. As a result, the matrix with individual employee as row and individual project as column will be very sparse. The collaborative filtering techniques on the sparse matrix will not perform well. Example implementations introduce employee groups and project groups into the matrix in order to obtain a denser matrix. The collaborative filtering techniques perform well on a matrix with employee group as a row and project group as a column.

By incorporating different employee group and project group levels in one matrix, there can be some overlapping employees of the employee groups from different employee group levels. As a result, the performance scores for employee groups with overlapping employees have correlations, which can help with collaborative filtering since they have similar engagements with the items (projects in this case). The data from different employee group levels and project group levels can help each other in filling the scores in the matrix.

The collective model inference process helps consider different aspects of the employee and project and collectively aggregate them into one performance score.

Sometimes, the project stakeholder needs to identify the project team for each milestone due to the human resource availability, strengths and interests, project duration, and so on. For this, examples helpful for understanding the present invention make the collaborative filtering to be milestone- based. Instead of using a performance score for the whole project duration to fill in the matrix, a performance score for each milestone is used to fill in the matrix. With that said, there can be one matrix for each milestone or otherwise in accordance with the desired implementation helpful for understanding the present invention.

Examples helpful for understanding the present invention can be incorporated in various scenarios. For example, examples helpful for understanding the present invention can facilitate an end-to-end solution. The project self-profiling, performance monitoring, performance prediction and performance optimization can be provided as a solution suite for project insights discovery and project performance modeling. This end-to-end solution can be offered as an analytic solution core suite as part of the solution core products.

The project self-profiling can be provided as an analytic solution core as part of the solution core products.

The performance monitoring can be provided as an analytic solution core as part of the solution core products.

The performance prediction can be provided as an analytic solution core as part of the solution core products.

The project performance optimization can be provided as an analytic solution core as part of the solution core products.

The examples helpful for understanding the present invention can be incorporated into a standalone machine learning library. The iterative learning scheme and recursive learning scheme for self-profiling can be offered as a standalone machine learning library that help self-profiling and insights discovery.

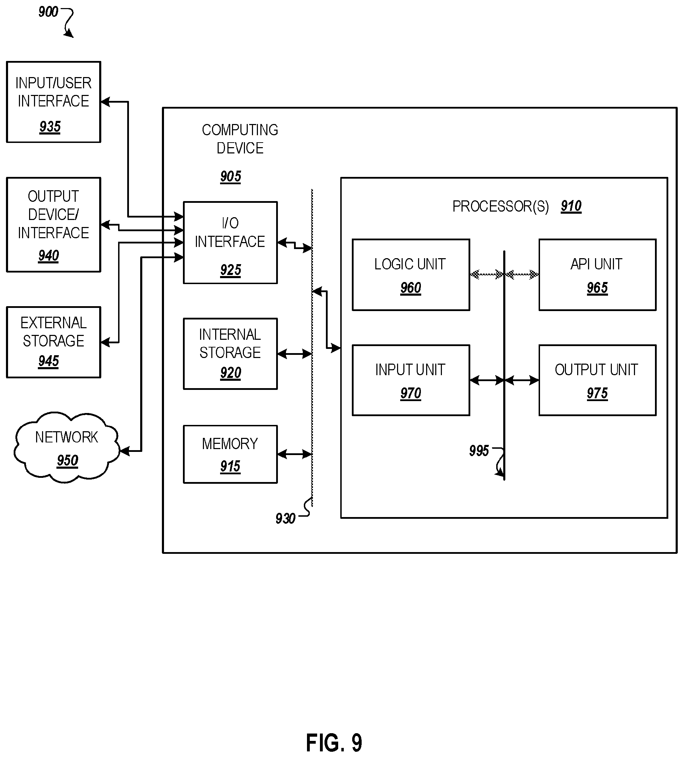

FIG. 9 illustrates an example computing environment with an example computer device suitable for use in some example implementations.

Computer device 905 in computing environment 900 can include one or more processing units, cores, or processors 910, memory 915 (e.g., RAM, ROM, and/or the like), internal storage 920 (e.g., magnetic, optical, solid state storage, and/or organic), and/or I/O interface 925, any of which can be coupled on a communication mechanism or bus 930 for communicating information or embedded in the computer device 905. I/O interface 925 is also configured to receive images from cameras or provide images to projectors or displays, depending on the desired implementation.

Computer device 905 can be communicatively coupled to input/user interface 935 and output device/interface 940. Either one or both of input/user interface 935 and output device/interface 940 can be a wired or wireless interface and can be detachable. Input/user interface 935 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 940 may include a display, television, monitor, printer, speaker, braille, or the like. In some example implementations, input/user interface 935 and output device/interface 940 can be embedded with or physically coupled to the computer device 905. In other example implementations, other computer devices may function as or provide the functions of input/user interface 935 and output device/interface 940 for a computer device 905.

Examples of computer device 905 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 905 can be communicatively coupled (e.g., via I/O interface 925) to external storage 945 and network 950 for communicating with any number of networked components, devices, and systems, including one or more computer devices of the same or different configuration. Computer device 905 or any connected computer device can be functioning as, providing services of, or referred to as a server, client, thin server, general machine, special-purpose machine, or another label.

I/O interface 925 can include, but is not limited to, wired and/or wireless interfaces using any communication or I/O protocols or standards (e.g., Ethernet, 802.1 Ix, Universal System Bus, WiMax, modem, a cellular network protocol, and the like) for communicating information to and/or from at least all the connected components, devices, and network in computing environment 900. Network 950 can be any network or combination of networks (e.g., the Internet, local area network, wide area network, a telephonic network, a cellular network, satellite network, and the like).

Computer device 905 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 905 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 910 can execute under any operating system (OS) (not shown), in a native or virtual environment. One or more applications can be deployed that include logic unit 960, application programming interface (API) unit 965, input unit 970, output unit 975, and inter-unit communication mechanism 995 for the different units to communicate with each other, with the OS, and with other applications (not shown). The described units and elements can be varied in design, function, configuration, or implementation and are not limited to the descriptions provided.

In some example implementations, when information or an execution instruction is received by API unit 965, it may be communicated to one or more other units (e.g., logic unit 960, input unit 970, output unit 975). In some instances, logic unit 960 may be configured to control the information flow among the units and direct the services provided by API unit 965, input unit 970, output unit 975, in some example implementations described above. For example, the flow of one or more processes or implementations may be controlled by logic unit 960 alone or in conjunction with API unit 965. The input unit 970 may be configured to obtain input for the calculations described in the example implementations, and the output unit 975 may be configured to provide output based on the calculations described in example implementations.

Processor(s) 910 can be configured to execute a method for facilitating project management as described in example implementations herein, which can involve, for input of a project having project data and employee data, executing feature extraction on the project data and the employee data to generate features; executing a self-profiling algorithm configured with unsupervised machine learning on the generated features to derive clusters and anomalies of the project; executing a performance monitoring process on the generated f7eatures to determine a probability of a key performance indicator value at a milestone; and executing a supervised machine learning model on the generated features, the derived clusters, the derived anomalies, the probability of the key performance indicator value at the milestone to generate a predicted performance value of the project as illustrated in FIG. 7.

In an example implementation as illustrated in FIG. 2, processor(s) 910 can be configured to execute the self-profiling algorithm configured with the unsupervised machine learning on the generated features to derive the clusters and the anomalies of the project by executing the unsupervised machine learning to generate unsupervised machine learning models based on the generated features; executing supervised machine learning on results from each of the unsupervised machine learning models to generate supervised ensembled machine learning models, each of the supervised ensemble machine learning models corresponding to each of the unsupervised machine learning models; and selecting ones of the unsupervised machine learning models as the models configured to derive the clusters and the anomalies based on an evaluation of the results of the unsupervised machine learning models against predictions generated by the supervised ensemble machine learning models.

In an example implementation as illustrated in FIG. 3, processor(s) 910 can be configured to execute the self-profiling algorithm configured with the unsupervised machine learning on the generated features to derive the clusters and the anomalies of the project by executing each unsupervised machine learning model algorithm from a set of unsupervised learning model algorithms on the generated features; determining one of the unsupervised machine learning models with an associated parameter set for the each unsupervised machine learning model algorithm that meets a selection criteria; determining an unsupervised machine learning model for deployment across the set of the unsupervised machine learning model algorithms from the one of the unsupervised machine learning models of the each unsupervised machine learning model algorithm that meets the selection criteria.

In an example implementation as illustrated in FIG. 3, processor(s) 910 can further deploy the unsupervised machine learning model for deployment; and during deployment of the unsupervised model for deployment, processor(s) 910 can further execute the method of applying the unsupervised machine learning model for deployment to the generated features to generate unsupervised output; attaching the unsupervised output to the features to get the expanded features; randomly selecting another unsupervised learning model algorithm from the set of unsupervised machine learning model algorithms; training the randomly selected unsupervised learning model algorithm on the expanded features to find another unsupervised machine learning model with another associated parameter set that meet the selection criteria; and for the another unsupervised learning model generated from the randomly selected unsupervised learning model algorithm having a better evaluation than the deployed unsupervised learning model for deployment, replacing the deployed unsupervised learning model for deployment with the another unsupervised learning model.

As illustrated in FIG. 4, processor(s) 910 can be configured to execute the self- profiling algorithm configured with the unsupervised machine learning on the generated features to derive the clusters and the anomalies of the project by a) applying a set of unsupervised machine learning model algorithms to the generated features to generate an unsupervised machine learning model for each of the unsupervised machine learning algorithms; b) attaching unsupervised output from the unsupervised machine learning model to the features; and c) reiterating steps a) and b) until an exit criteria is met.

As illustrated in FIG. 5, processor(s) 910 can be configured to execute the performance monitoring process on the generated features to determine the probability of a key performance indicator value at a milestone by generating, from historical projects, a transition network relating a transition between a plurality of first key performance indicators in a first milestone to a plurality of second key performance indicators in a second milestone; wherein the probability of the transition is determined based on a number of times the plurality of first key performance indicators of the first milestone transitioned to the second key performance indicators in the second milestone.

As illustrated in FIGS. 5 and 6, processor(s) 910 can be configured to execute a performance monitoring process on the generated features to determine the probability of the key performance indicator value at the milestone by generating a multi-tasking supervised machine learning model to predict the key performance indicator values at the milestone based on the key performance indicator values at earlier milestones; wherein the probability of the key performance indicator value is one of a category for when a classification model is used as the multi-tasking supervised machine learning model or a numerical score for when a regression model is used as the multi-tasking supervised machine learning model; and wherein the key performance indicator values at the milestone are predicted concurrently with the multi tasking supervised machine learning model.

As illustrated in FIG. 8, processor(s) 910 can be configured to execute a method helpful for understanding the present invention involving generating a matrix from project performance data, the matrix structured in rows of employee related data across different dimensions and columns of project related data, the matrix comprising values indicative of performance scores derived from the project performance data; for missing ones of the values in the matrix, generating the missing ones of the values in the matrix from a training process; for an input of a new project, identifying ones of the rows and ones of the columns that match the employee related data in the new project and the project related data of the new project; aggregating ones of the values corresponding to the identified ones of the rows and the ones of the columns; ranking employee groups from the employee related data according to the aggregated ones of the values; and selecting an employee group from the employee related data having a highest rank for execution of the new project.

As illustrated in FIG. 7, processor(s) 910 can be configured to, for execution of a supervised machine learning model on the generated features, the derived clusters, the derived anomalies, the probability of the key performance indicator value at the milestone to generate a predicted performance value of the project, executing a self-profiling algorithm configured with unsupervised machine learning on the generated features to derive clusters and anomalies of the project; executing a performance monitoring process on the generated features to determine a probability of a the key performance indicator value at a milestone; and executing a supervised machine learning model on the generated features, the derived clusters, the derived anomalies, the probability of the key performance indicator value at the milestone to generate a predicted performance of the project.

As described in FIG. 3, example implementations can be extended into loT data fields such as loT insurance. In such an example implementation, processor(s) 910 can be configured to execute a computer-implemented method for executing a self-profiling algorithm configured with unsupervised machine learning on generated features to derive clusters and anomalies of Internet of Things (IoT) data, which can involve executing each unsupervised machine learning model algorithm from a set of unsupervised learning model algorithms on the generated features; determining a best one of the unsupervised machine learning models with an associated best parameter set for the each unsupervised machine learning model algorithm; and determining a best unsupervised model across the set of the unsupervised machine learning model algorithms from the best one of the unsupervised machine learning models of the each unsupervised machine learning model algorithm.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope of the present application being indicated by the following claims.

## Claims

1. A computer-implemented method for facilitating project management, comprising:
for input of a project comprising project data and employee data, executing feature extraction on the project data and the employee data to generate features (700);
executing a self-profiling algorithm (103) configured with unsupervised machine learning on the generated features (700) to derive clusters and anomalies of the project;
executing a performance monitoring process (104) on the generated features (700) to determine a probability of a key performance indicator value at a milestone; and
executing a supervised machine learning model (703) on the generated features (700), the derived clusters, the derived anomalies, the probability of the key performance indicator value at the milestone to generate a predicted performance value (704) of the project;
**characterized in that**
the executing the self- profiling algorithm configured with the unsupervised machine learning on the generated features (700) to derive the clusters and the anomalies of the project comprises:
a) applying a set of unsupervised machine learning model algorithms to the generated features (700) to generate an unsupervised machine learning model for each of the unsupervised machine learning algorithms;
b) attaching unsupervised output form the unsupervised machine learning model to the features; and
c) reiterating steps a) and b) until an exit criteria is met.

2. The computer-implemented method of claim 1,
wherein the executing the self-profiling algorithm (103) configured with the unsupervised machine learning on the generated features (700) to derive the clusters and the anomalies of the project comprises:
executing the unsupervised machine learning to generate unsupervised machine learning models based on the generated features (700);
executing supervised machine learning (703) on results from each of the unsupervised machine learning models to generate supervised ensembled machine learning models, each of the supervised ensemble machine learning models corresponding to each of the unsupervised machine learning models; and
selecting ones of the unsupervised machine learning models as the models configured to derive the clusters and the anomalies based on an evaluation of the results of the unsupervised machine learning models against predictions generated by the supervised ensemble machine learning models.

3. The computer-implemented method of claim 1,
wherein the executing the self- profiling algorithm (103) configured with the unsupervised machine learning on the generated features (700) to derive the clusters and the anomalies of the project comprises:
executing each unsupervised machine learning model algorithm from a set of unsupervised learning model algorithms on the generated features (700); determining one of the unsupervised machine learning models with an associated parameter set for the each unsupervised machine learning model algorithm that meets a selection criteria;
determining an unsupervised machine learning model for deployment across the set of the unsupervised machine learning model algorithms from the one of the unsupervised machine learning models of the each unsupervised machine learning model algorithm that meets the selection criteria.

4. The computer-implemented method of claim 3, further comprising
deploying the unsupervised machine learning model for deployment; and during deployment of the unsupervised model for deployment:
applying the unsupervised machine learning model for deployment to the generated features (700) to generate unsupervised output;
attaching the unsupervised output to the features to get the expanded features;
randomly selecting another unsupervised learning model algorithm from the set of unsupervised machine learning model algorithms;
training the randomly selected unsupervised learning model algorithm on the expanded features to find another unsupervised machine learning model with another associated parameter set that meets the selection criteria; and
for the another unsupervised learning model generated from the randomly selected unsupervised learning model algorithm having a better evaluation than the deployed unsupervised learning model for deployment, replacing the deployed unsupervised learning model for deployment with the another unsupervised learning model.

5. The computer-implemented method of claim 1,
wherein the executing the performance monitoring process (104) on the generated features (700) to determine the probability of a key performance indicator value at a milestone comprises:
generating, from historical projects, a transition network relating a transition between a plurality of first key performance indicators in a first milestone to a plurality of second key performance indicators in a second milestone;
wherein the probability of the transition is determined based on a number of times the plurality of first key performance indicators of the first milestone transitioned to the second key performance indicators in the second milestone.

6. The computer-implemented method of claim 1,
wherein the executing a performance monitoring process (104) on the generated features (700) to determine the probability of the key performance indicator value at the milestone comprises:
generating a multi-tasking supervised machine learning model to predict the key performance indicator values at the milestone based on the key performance indicator values at earlier milestones;
wherein the probability of the key performance indicator value is one of a category for when a classification model is used as the multi-tasking supervised machine learning model or a numerical score for when a regression model is used as the multi-tasking supervised machine learning model; and
wherein the key performance indicator values at the milestone are predicted concurrently.

## Patentansprüche

1. Computerimplementiertes Verfahren zum Erleichtern eines Projektmanagements, das Folgendes umfasst;
zur Eingabe eines Projekts, das Projektdaten und Arbeitnehmerdaten umfasst, Ausführen einer Merkmalsextraktion an den Projektdaten und den Arbeitnehmerdaten, um Merkmale (700) zu erzeugen;
Ausführen eines Selbstprofilierungsalgorithmus (103), der mit einem nicht überwachten maschinellen Lernen konfiguriert ist, an erzeugten Merkmalen (700), um Gruppen und Anomalien des Projekts herzuleiten;
Ausführen eines Leistungsfähigkeitsüberwachungsprozesses (104) an den erzeugten Merkmalen (700), um eine Wahrscheinlichkeit eines Hauptleistungsindikatorwerts bei einem Meilenstein zu bestimmen; und
Ausführen eines überwachten Modells (703) zum maschinellen Lernen an den erzeugten Merkmalen (700), den hergeleiteten Gruppen, den hergeleiteten Anomalien und der Wahrscheinlichkeit des Hauptleistungsindikatorwerts bei dem Meilenstein, um einen vorhergesagten Leistungsfähigkeitswert (704) des Projekts zu erzeugen;
**dadurch gekennzeichnet, dass** das Ausführen des Selbstprofilierungsalgorithmus, der mit dem nicht überwachten maschinellen Lernen konfiguriert ist, an den erzeugten Merkmalen (700), um die Gruppen und die Anomalien des Projekts herzuleiten, Folgendes umfasst:
a) Anwenden eines Satzes von Algorithmen für nicht überwachte Modelle zum maschinellen Lernen auf die erzeugten Merkmale (700), um ein nicht überwachtes Modell zum maschinellen Lernen für jeden der Algorithmen zum nicht überwachten maschinellen Lernen zu erzeugen;
b) Anfügen einer nicht überwachten Ausgabe des nicht überwachten Modells zum maschinellen Lernen an die Merkmale und
c) Wiederholen der Schritte a) und b), bis ein Austrittskriterium erfüllt ist.

2. Computerimplementiertes Verfahren nach Anspruch 1,
wobei das Ausführen des Selbstprofilierungsalgorithmus (103), der mit dem nicht überwachten maschinellen Lernen konfiguriert ist, an den erzeugten Merkmalen (700), um die Gruppen und die Anomalien des Projekts herzuleiten, Folgendes umfasst:
Ausführen des nicht überwachten maschinellen Lernens, um nicht überwachte Modelle zum maschinellen Lernen auf der Grundlage der erzeugten Merkmale (700) zu erzeugen;
Ausführen eines überwachten maschinellen Lernens (703) an Ergebnissen von jedem der nicht überwachten Modelle zum maschinellen Lernen, um überwachte zusammenspielende Modelle zum maschinellen Lernen zu erzeugen, wobei jedes der überwachten zusammenspielenden Modelle zum maschinellen Lernen jedem der nicht überwachten Modelle zum maschinellen Lernen entspricht; und
Wählen bestimmter der nicht überwachten Modelle zum maschinellen Lernen als die Modelle, die konfiguriert sind, die Gruppen und die Anomalien herzuleiten, auf der Grundlage einer Bewertung der Ergebnisse der nicht überwachten Modelle zum maschinellen Lernen gegen Vorhersagen, die durch die überwachten zusammenspielenden Modelle zum maschinellen Lernen erzeugt wurden.

3. Computerimplementiertes Verfahren nach Anspruch 1,
wobei das Ausführen des Selbstprofilierungsalgorithmus (103), der mit dem nicht überwachten maschinellen Lernen konfiguriert ist, an den erzeugten Merkmalen (700), um die Gruppen und die Anomalien des Projekts herzuleiten, Folgendes umfasst:
Ausführen jedes Algorithmus für nicht überwachte Modelle zum maschinellen Lernen aus einem Satz Algorithmen für Modelle zum nicht überwachten Lernen an den erzeugten Merkmalen (700);
Bestimmen eines der nicht überwachten Modelle zum maschinellen Lernen mit einem zugeordneten Parametersatz für den jeweiligen Algorithmus für nicht überwachte Modelle zum maschinellen Lernen, das ein Auswahlkriterium erfüllt; und
Bestimmen eines nicht überwachten Modells zum maschinellen Lernen zum Einsatz über den Satz Algorithmen für nicht überwachte Modelle zum maschinellen Lernen aus dem einen der nicht überwachten Modelle zum maschinellen Lernen des jeweiligen Algorithmus für nicht überwachte Modelle zum maschinellen Lernen, das das Auswahlkriterium erfüllt.

4. Computerimplementiertes Verfahren nach Anspruch 3, das ferner Folgendes umfasst:
Einsetzen des nicht überwachten Modells zum maschinellen Lernen zum Einsatz; und
während des Einsatzes des nicht überwachten Modells zum Einsatz:
Anwenden des nicht überwachten Modells zum maschinellen Lernen zum Einsatz auf die erzeugten Merkmale (700), um eine nicht überwachte Ausgabe zu erzeugen;
Anfügen der nicht überwachten Ausgabe an die Merkmale, um die erweiterten Merkmale zu erhalten;
zufälliges Wählen eines weiteren Algorithmus für nicht überwachte Modelle zum Lernen aus dem Satz Algorithmen für nicht überwachte Modelle zum maschinellen Lernen;
Trainieren des zufällig gewählten Algorithmus für nicht überwachte Modelle zum Lernen an den erweiterten Merkmalen, um ein weiteres nicht überwachtes Modell zum maschinellen Lernen mit einem weiteren zugeordneten Parametersatz zu finden, das das Auswahlkriterium erfüllt; und
für das weitere nicht überwachte Modell zum Lernen, das aus dem zufällig gewählten Algorithmus für nicht überwachte Modelle zum Lernen erzeugt wurde, das eine bessere Bewertung als das eingesetzte nicht überwachte Modell zum Lernen zum Einsatz aufweist, Ersetzen des eingesetzten nicht überwachten Modells zum Lernen zum Einsatz durch das weitere nicht überwachte Modell zum Lernen.

5. Computerimplementiertes Verfahren nach Anspruch 1,
wobei das Ausführen des Leistungsfähigkeitsüberwachungsprozesses (104) an den erzeugten Merkmalen (700), um die Wahrscheinlichkeit eines Hauptleistungsindikatorwerts bei einem Meilenstein zu bestimmen, Folgendes umfasst:
Erzeugen aus historischen Projekten eines Übergangsnetzes, das sich auf einen Übergang zwischen mehreren ersten Hauptleistungsindikatoren in einem ersten Meilenstein zu mehreren zweiten Hauptleistungsindikatoren in einem zweiten Meilenstein bezieht;
wobei die Wahrscheinlichkeit des Übergangs auf der Grundlage einer Anzahl von Übergängen der mehreren ersten Hauptleistungsindikatoren des ersten Meilensteins zu den zweiten Hauptleistungsindikatoren im zweiten Meilenstein bestimmt wird.

6. Computerimplementiertes Verfahren nach Anspruch 1,
wobei das Ausführen eines Leistungsfähigkeitsüberwachungsprozesses (104) an den erzeugten Merkmalen (700), um die Wahrscheinlichkeit des Hauptleistungsindikatorwerts bei dem Meilenstein zu bestimmen, Folgendes umfasst:
Erzeugen eines überwachten Modells zum maschinellen Lernen mit mehreren Tasks, um die Hauptleistungsindikatorwerte bei dem Meilenstein auf der Grundlage der Hauptleistungsindikatorwerte bei früheren Meilensteinen vorherzusagen;
wobei die Wahrscheinlichkeit des Hauptleistungsindikatorwerts eine einer Kategorie dafür, wann ein Klassifizierungsmodell als das überwachte Modell zum maschinellen Lernen mit mehreren Tasks verwendet wird, oder einer numerischen Bewertung dafür, wann ein Regressionsmodell als das überwachte Modell zum maschinellen Lernen mit mehreren Tasks verwendet wird, ist; und
die Hauptleistungsindikatorwerte bei dem Meilenstein zeitlich überlappend vorhergesagt werden.

## Revendications

1. Procédé mis en œuvre par ordinateur pour faciliter une gestion de projet, comprenant les étapes consistant à :
pour une entrée d'un projet comprenant des données de projet et des données d'employés, exécuter une extraction de caractéristiques sur les données de projet et les données d'employés pour générer des caractéristiques (700) ;
exécuter un algorithme d'auto-profilage (103) configuré avec un apprentissage automatique non supervisé sur les caractéristiques générées (700) pour dériver des clusters et des anomalies du projet ;
exécuter un processus de surveillance de performance (104) sur les caractéristiques générées (700) pour déterminer une probabilité d'une valeur d'indicateurs de performance clés à un moment important ; et
exécuter un modèle d'apprentissage automatique supervisé (703) sur les caractéristiques générées (700), les clusters dérivés, les anomalies dérivées, la probabilité de la valeur d'indicateurs de performance clés au moment important pour générer une valeur de performance prédite (704) du projet ;
**caractérisé en ce que**
l'étape consistant à exécuter l'algorithme d'auto-profilage configuré avec l'apprentissage automatique non supervisé sur les caractéristiques générées (700) pour dériver les clusters et les anomalies du projet comprend de :
a) appliquer un ensemble d'algorithmes de modèle d'apprentissage automatique non supervisé sur les caractéristiques générées (700) pour générer un modèle d'apprentissage automatique non supervisé pour chacun des algorithmes d'apprentissage automatique non supervisé ;
b) attacher une sortie non supervisée provenant du modèle d'apprentissage automatique non supervisé aux caractéristiques ; et
c) réitérer les étapes a) et b) jusqu'à satisfaire un critère de sortie.

2. Procédé mis en œuvre par ordinateur selon la revendication 1,
dans lequel l'étape consistant à exécuter l'algorithme d'auto-profilage (103) configuré avec l'apprentissage automatique non supervisé sur les caractéristiques générées (700) pour dériver les clusters et les anomalies du projet comprend de :
exécuter l'apprentissage automatique non supervisé pour générer des modèles d'apprentissage automatique non supervisé sur la base des caractéristiques générées (700) ;
exécuter un apprentissage de machine supervisé automatique (703) sur des résultats provenant de chacun des modèles d'apprentissage automatique non supervisé pour générer des modèles d'apprentissage automatique ensembliste supervisé, chacun des modèles d'apprentissage automatique ensembliste supervisé correspondant à chacun des modèles d'apprentissage automatique non supervisé ; et
sélectionner certains des modèles d'apprentissage automatique non supervisé comme modèles configurés pour dériver les clusters et les anomalies sur la base d'une évaluation des résultats des modèles d'apprentissage automatique non supervisé à l'encontre de prédictions générées par les modèles d'apprentissage automatique ensembliste supervisé.

3. Procédé mis en œuvre par ordinateur selon la revendication 1,
dans lequel l'étape consistant à exécuter l'algorithme d'auto-profilage (103) configuré avec l'apprentissage automatique non supervisé sur les caractéristiques générées (700) pour dériver les clusters et les anomalies du projet comprend de :
exécuter chaque algorithme de modèle d'apprentissage automatique non supervisé à partir d'un ensemble d'algorithmes de modèle d'apprentissage non supervisé sur les caractéristiques générées (700) ; déterminer l'un des modèles d'apprentissage automatique non supervisé avec un ensemble de paramètres associés pour chaque algorithme de modèle d'apprentissage automatique non supervisé qui satisfait à un critère de sélection ;
déterminer un modèle d'apprentissage automatique non supervisé pour déploiement à travers l'ensemble des algorithmes de modèle d'apprentissage automatique non supervisé à partir de l'un des modèles d'apprentissage automatique non supervisé de chaque algorithme de modèle d'apprentissage automatique non supervisé qui satisfait au critère de sélection.

4. Procédé mis en œuvre par ordinateur selon la revendication 3, comprenant en outre les étapes consistant à :
déployer le modèle d'apprentissage automatique non supervisé pour déploiement ; et pendant le déploiement du modèle non supervisé pour déploiement :
appliquer le modèle d'apprentissage automatique non supervisé pour déploiement sur les caractéristiques générées (700) pour générer une sortie non supervisée ;
attacher la sortie non supervisée aux caractéristiques pour obtenir les caractéristiques élargies ;
sélectionner de manière aléatoire un autre algorithme de modèle d'apprentissage non supervisé à partir de l'ensemble d'algorithmes de modèle d'apprentissage automatique non supervisé ;
entraîner l'algorithme de modèle d'apprentissage non supervisé sélectionné de manière aléatoire sur les caractéristiques élargies pour trouver un autre modèle d'apprentissage automatique non supervisé avec un autre ensemble de paramètres associés qui satisfait au critère de sélection ; et
pour l'autre modèle d'apprentissage non supervisé généré à partir de l'algorithme de modèle d'apprentissage non supervisé sélectionné de manière aléatoire ayant une meilleure évaluation que le modèle d'apprentissage non supervisé pour déploiement déployé, remplacer le modèle d'apprentissage non supervisé pour déploiement déployé par l'autre modèle d'apprentissage non supervisé.

5. Procédé mis en œuvre par ordinateur selon la revendication 1,
dans lequel l'étape consistant à exécuter le processus de surveillance de performance (104) sur les valeurs générées (700) pour déterminer la probabilité d'une valeur d'indicateurs de performance clés à un moment important comprend de :
générer, à partir de projets historiques, un réseau de transition relatif à une transition entre une pluralité de premiers indicateurs de performance clés dans un premier moment important et une pluralité de deuxièmes indicateurs de performance clés dans un deuxième moment important ;
dans lequel la probabilité de la transition est déterminée sur la base d'un nombre de fois où la pluralité de premiers indicateurs de performance clés du premier moment important ont effectué une transition vers les indicateurs de performance clés dans le deuxième moment important.

6. Procédé mis en œuvre par ordinateur selon la revendication 1,
dans lequel l'étape consistant à exécuter le processus de surveillance de performance (104) sur les valeurs générées (700) pour déterminer la probabilité de la valeur d'indicateurs de performance clés au moment important comprend de :
générer un modèle d'apprentissage automatique supervisé multitâche pour prédire les valeurs d'indicateurs de performance clés au moment important sur la base des valeurs d'indicateurs de performance clés à des moments importants antérieurs ;
dans lequel la probabilité de la valeur d'indicateurs de performance clés est l'une d'une catégorie pour le cas où un modèle de classification est utilisé à titre de modèle d'apprentissage automatique supervisé multitâche ou d'un score numérique pour le cas où un modèle de régression est utilisé à titre de modèle d'apprentissage automatique supervisé multitâche ; et
dans lequel les valeurs d'indicateurs de performance clés au moment important sont prédites simultanément.
